# EUROPÄISCHE PATENTSCHRIFT

(11) **EP 4 008 743 B1**
(45) Veröffentlichungstag und Bekanntmachung des Hinweises auf die Patenterteilung: **04.09.2024**
(21) Anmeldenummer: 21205798.8
(22) Anmeldetag: 01.11.2021
(51) Int. Cl.: C08G 69/36, C08L 77/06, C08J 3/12

(54) **WASSERDAMPF-RESISTENTE TRANSPARENTE POLYAMIDE**
WATER VAPOUR-RESISTANT TRANSPARENT POLYAMIDES
POLYAMIDE TRANSPARENT RÉSISTANT À LA VAPEUR D'EAU

(30) Priorität: 04.12.2020 EP 20211736
(43) Veröffentlichungstag der Anmeldung: 08.06.2022
(73) Patentinhaber: EMS-CHEMIE AG, 7013 Domat/Ems (CH)
(72) Erfinder: WIEDEMANN, Thomas, 4144 Arlesheim (CH); AEPLI, Etienne, 7013 Domat/Ems (CH)
(74) Vertreter: Bremi, Tobias Hans

(56) Entgegenhaltungen:
- EP-A1- 0 603 813
- EP-A1- 2 666 803
- WO-A1-2007/087896

## Beschreibung

### TECHNISCHES GEBIET

Die vorliegende Erfindung betrifft transparente Polyamide auf Basis von cycloaliphatischen Diamin-Bausteinen und aromatischen Dicarbonsäure-Bausteinen, die sich durch besondere Widerstandsfähigkeit gegenüber Wasserdampf auszeichnen, sowie durch gute mechanische Eigenschaften. Weiter betrifft die Erfindung Verfahren zur Herstellung derartiger transparenter Polyamide, Verwendungen derartiger Polyamide und Bauteile aus derartigen Polyamiden.

### STAND DER TECHNIK

Transparente amorphe Copolyamidformmassen und daraus herstellbare transparente amorphe Polyamidformkörper sind aus dem Stand der Technik bekannt. Grundsätzlich werden dabei im Bereich der transparenten Polyamide zwei Polymertypen unterschieden, und zwar zum einen mikrokristalline transparente Polyamide und zum anderen amorphe transparente Polyamide.

Mikrokristalline transparente Copolyamidformmassen und deren Verwendung für Brillengestelle, Apparateschaugläser sowie -abdeckungen und Leuchtenabdeckungen sind z.B. aus der DE-A-43 10 970 bekannt. Die dort beschriebenen Polyamide werden aus 4,4'-Diaminocyclohexylmethan als Diaminkomponente und Dodecandisäure als Säurekomponente hergestellt.

In der EP-A-1 595 907 sind transparente amorphe Polyamide beschrieben, die auf cycloaliphatischen Diaminen und einer C14-Dicarbonsäure basieren.

Aus der EP-A-0 725 101 sind zudem transparente, amorphe Polyamide auf Basis von cycloaliphatischen Diaminen und einer C12-Dicarbonsäure bekannt mit u.a. ausgezeichneter Spannungsrissbeständigkeit in den meisten Lösungsmitteln.

Solche transparente Systeme auf Basis von cycloaliphatischen Diaminen können auch aromatische Bausteine enthalten. So sind beispielsweise aus der EP-A-725100 transparente Systeme des Typs MACMI/12 bekannt und aus der DE-C-2642244, der WO-A-2007/087896 und der EP-A-2 666 803 transparente Systeme des Typs MACMI/MACMT/12, respektive aus der EP-A-055 335 transparente Systeme des Typs PACMI/PACMT/12. Aus der US-2009/306308 sind transparente Systeme des Typs PACMT/PACM10/12 respektive des Typs PACMT/PACM14/12 sowie PACMT/MACM14/12 bekannt, jeweils mit einem hohen aliphatischen Anteil und ungenügenden thermomechanischen Eigenschaften. US 5,416,172 offenbart transparente Systeme des Typs MACMI/MACMT/MACM6/12.

EP-A-0603813 beschreibt Formkörper aus transparenten Copolyamiden und die transparenten Copolyamide selbst, aufgebaut aus langkettigen Monomeren mit 9 bis 12 C-Atomen und aus Monomeren für teilaromatische Polyamide in statistischer Verteilung, die sich auch im konditionierten Zustand durch Steifigkeit, Festigkeit, hohe Zähigkeit und ausgezeichnete Lösemittelbeständigkeit auszeichnen.

### DARSTELLUNG DER ERFINDUNG

Die einleitend erwähnten transparenten Polyamide verfügen, je nach Einstellung, über gute mechanische Eigenschaften und über eine gute Transparenz. Es zeigt sich aber, dass die aus dem Stand der Technik bekannten transparenten Polyamid-Systeme eine ungenügende Widerstandsfähigkeit gegenüber wiederholten Aussetzens von Wasserdampf aufweisen. Insbesondere zeigt es sich, dass die bekannten Systeme in der Regel unter diesen Bedingungen Haarrisse ausbilden, und dadurch sowohl ihre Transparenz verlieren, als auch die mechanischen Eigenschaften beeinträchtigt werden und gegebenenfalls auch die Dichtigkeit, wenn es darum geht, durch derartige Materialien Räume voneinander abzugrenzen.

Es ist entsprechend unter anderem Aufgabe der vorliegenden Erfindung, eine gegenüber dem Stand der Technik verbesserte transparente Polyamid-Formmasse bereitzustellen, insbesondere eine transparente Formmasse, die auf cycloaliphatischen Diaminen und aromatischen Dicarbonsäuren sowie weiteren aliphatischen Bausteinen beruht, und die eine hohe Widerstandsfähigkeit gegenüber Wasserdampf zeigt. Die Bauteile sind zudem kratzfest und nehmen wenig Wasser auf, und sie weisen eine hohe Chemikalienbeständigkeit auf, was auch bedeutet, dass sie beispielsweise, wenn sie Nahrungsmitteln oder Chemikalien mit Farbstoffen ausgesetzt sind, ohne weiteres wieder gereinigt werden können ohne dass Färbungen zurückbleiben.

Gegenstand der vorliegenden Erfindung ist entsprechend eine Polyamidformmasse gemäss Anspruch 1, respektive Verwendungen einer derartigen Polyamidformmasse, Herstellungsverfahren für derartige Polyamidformmassen und daraus erzeugte Formteile. Konkret betrifft die vorliegende Erfindung eine Polyamidformmasse enthaltend mindestens ein Copolyamid. Dieses Copolyamid ist aufgebaut wenigstens aus den Polyamid-Einheiten AB/AC/D, wie unten definiert. Es kann dabei auch noch weitere Polyamid-Einheiten in diesem Copolyamid geben, bevorzugt gibt es aber nur diese Polyamid-Einheiten. Insbesondere wenn beispielsweise für (A) wie unten definiert zwei verschiedene Systeme ausgewählt werden, können komplexe Strukturen aufgebaut werden.

Werden beispielsweise für (A) zwei verschiedene Systeme A' und A" ausgewählt, so kann das Polyamid anschliessend geschrieben werden als A'B/A"C/D als Kurzform, bei genauer Betrachtung handelt es sich aber um ein System mit folgenden Polyamid-Einheiten: A'B/A'C/A"B/A"C/D.

Die Bausteine des Copolyamids aufgebaut wenigstens aus den Polyamid-Einheiten AB/AC/D sind dabei wie folgt definiert:
(A) ist ausgewählt als wenigstens ein cycloaliphatisches Diamin aus der Gruppe: Bis-(4-amino-3-methyl-cyclohexyl)methan (MACM) und Bis-(4-amino-cyclohexyl)methan (PACM).
(B) ist ausgewählt als wenigstens eine aromatische Dicarbonsäure aus der Gruppe: Isophthalsäure (I), Naphtalindicarbonsäure, und Terephthalsäure (T).
(C) ist ausgewählt als wenigstens eine aliphatische Dicarbonsäure aus der Gruppe: Decandisäure, Undecandisäure, Dodecandisäure, Tridecandisäure, Tetradecandisäure, Pentadecandisäure, Hexadecandisäure.
(D) ist ausgewählt als wenigstens ein Lactam oder eine α,ω-Aminocarbonsäure aus der Gruppe: Laurinlactam (LC 12), Undecanolactam (LC 11), 12-Aminododecansäure, und 11-Aminoundecansäure.

Dabei gelten folgende Massgaben:
die Anteile der Polyamid-Einheiten AB liegen im Bereich von 30 bis 45 mol-%,
die Anteile der Polyamid-Einheiten AC liegen im Bereich von 30 bis 40 mol-% und
die Anteile der Polyamid-Einheiten D liegen im Bereich von 20 bis 32 mol-%,
wobei die Summe der Polyamid-Einheiten AB, AC und D 100 mol-% beträgt.

Es zeigt sich, dass Polyamidformmassen aus diesem Copolyamid die Nachteile der transparenten aus dem Stand der Technik bekannten Formmassen überwinden können, und bei guter Transparenz gute thermomechanische Eigenschaften bereitstellen können, und insbesondere auch gegenüber häufigem Kontakt mit Wasserdampf einer Temperatur von 100 °C stabil sind, namentlich keine oder nur wenig Trübung erfahren und/oder Haarrisse ausbilden. Entsprechend sind derartige Formteile nicht nur für den Küchenbereich und zur Verwendung in der Spülmaschine geeignet, sondern sie sind auch für Foodprozessoren mit Dampfbehandlung besonders geeignet.

Es zeigt sich insbesondere, dass diese Eigenschaften nur erreicht werden können, wenn es eben die langkettigen aliphatischen Dicarbonsäuren als Bausteine neben den langkettigen Lactamen oder α,ω-Aminocarbonsäuren gibt, in Kombination mit wenigstens einem cycloaliphatischen Diamin und wenigstens einer aromatischen Dicarbonsäure. Wird einer dieser Bausteine weggelassen, lassen sich die Eigenschaften nicht erreichen. Werden zudem die Komponenten nicht in den beanspruchten Proportionen eingesetzt, lassen sich die Eigenschaften ebenfalls nicht erreichen, wie weiter unten anhand der

Ausführungsbeispiele dargelegt werden wird.

Die Transparenz einer aus der transparenten Formmasse hergestellten Platte mit Dicke von 2 mm, gemessen als Lichttransmission gemäss ASTM D1003, beträgt bevorzugt über 90%, insbesondere bevorzugt mindestens 92% und der Haze (Trübung) bevorzugtermassen maximal 5%, insbesondere bevorzugt maximal 3%. Für die angestrebte Verwendung der erfindungsgemässen Formmassen werden Steifigkeiten (Zug-E-Modul grösser 1500 MPa) und hohe Zähigkeiten (bevorzugtermassen Schlagzähigkeit bei 23 °C und -30 °C: ohne Bruch) erzielt.

Der Wert der Lichttransmission, welche als Mass für die Transparenz verwendet wird, ist dabei im Rahmen der vorliegenden Anmeldung stets als bestimmt nach der Methode ASTM D1003:2013 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70 x 2 mm oder Platten der Dimension 60 x 60 x 2 mm durchgeführt. Der Transmissionswert wird für den sichtbaren Wellenlängenbereich definiert nach CIE-C d. h. mit wesentlichen Intensitäten ca. zwischen 400 und 770nm, angegeben. Die Rundplatten 70 x 2 mm bzw. quadratischen Platten 60 x 60 x 2 mm werden z. B. dafür auf einer Arburg Spritzgussmaschine im polierten Werkzeug hergestellt, wobei die Zylindertemperatur zwischen 200 °C und 340 °C und die Werkzeugtemperatur zwischen 20 °C und 140 °C liegt.

Gemäss einer weiteren bevorzugten Ausführungsform weist das Copolyamid eine Glasübergangstemperatur (Tg) von 150 °C bis 200 °C, besonders bevorzugt von 160 °C bis 180 °C auf.

Eine erste bevorzugte Ausführungsform der Polyamidformmasse ist dadurch gekennzeichnet, dass die Summe der aliphatischen Polyamid-Einheiten AC und D im Bereich von 55-65 mol-%, vorzugsweise im Bereich von 58-64 mol-% liegt. Es zeigt sich, dass die spezifische Auswahl der aliphatischen Einheiten in diesem Bereich insbesondere die Widerstandsfähigkeit gegenüber Wasserdampf einer hohen Temperatur erhöht. Bevorzugtermassen liegen die Anteile der Polyamid-Einheiten AB im Bereich von 35 - 45 mol-%, vorzugsweise im Bereich von 36-42 mol-%.

Weiter bevorzugtermassen liegen die Anteile der Polyamid-Einheiten AC im Bereich von 31-38, vorzugsweise im Bereich von 32-35 mol-%.

Gemäss einer weiteren bevorzugten Ausführungsform liegen die Anteile der Polyamid-Einheiten D im Bereich von 22-31, vorzugsweise im Bereich von 25-30 mol-%.

Besonders gute Eigenschaften für die Polyamidformmasse werden erhalten, wenn das Copolyamid AB/AC/D amorph ist und wenn (A) ausgewählt ist als ausschliesslich Bis-(4-amino-3-methyl-cyclohexyl)methan (MACM). Amorph im Sinne der Erfindung bedeutet, dass das Copolyamid eine Schmelzenthalpie bestimmt nach ISO 11357-3 (2012) von kleiner gleich 3 J/g aufweist.

(B) ist bevorzugtermassen ausgewählt als eine Mischung von Isophthalsäure (I) und Terephthalsäure (T). Dabei liegt vorzugsweise das Verhältnis von Isophthalsäure (I) zu Terephthalsäure (T) im Bereich von 40:60 bis 60:40, insbesondere bevorzugt im Bereich von 45:55 bis 55:45. Typischerweise werden die beiden Bausteine im Wesentlichen in einem Verhältnis 1:1 eingesetzt.

Wie erwähnt ist es für die Erreichung der Effekte wichtig, dass eine langkettige Dicarbonsäure eingesetzt wird. Besonders gute Eigenschaften können erhalten werden, wenn (C) ausgewählt ist ausschliesslich aus Dodecandisäure.

Weiterhin ist es bevorzugt, dass (C) ausgewählt ist ausschliesslich aus Dodecandisäure und (D) ausgewählt ist ausschliesslich aus Laurinlactam (LC 12).

Besonders stabile Eigenschaften können erhalten werden, wenn das Copolyamid ausschliesslich aus den Polyamid-Einheiten AB/AC/D besteht. Dabei ist wie oben erwähnt zu berücksichtigen, dass darunter die Kurzform zu verstehen ist, und wenn beispielsweise zwei verschiedene cycloaliphatische Diamine für (A) eingesetzt werden, so umfasst die ausschliesslich vorliegende Struktur A'B/A"C/D als Kurzform auch das eigentlich vorliegende System mit folgenden Polyamid-Einheiten: A'B/A'C/A"B/A"C/D.

Eine ganz besonders bevorzugte Ausführungsform der Polyamidformmasse verfügt über folgenden Aufbau: MACMT/MACMI/MACM12/12, d. h. ist aufgebaut ausschliesslich aus MACM, Terephthalsäure, Isophthalsäure, Dodecandisäure und Laurinlactam. Dabei sind bevorzugt die Polyamid-Einheiten verteilt wie folgt, wobei sich die Prozente auf Mol beziehen und auf 100% addieren:
MACMT/MACMI/MACM12/12: 17-22 %/17-22 %/31-36 %/24-31 %.

Eine derartige Polyamidformmasse kann und wird typischerweise für viele Anwendungen zusätzlich mit den für die Einstellung der Eigenschaften erforderlichen Additiven versetzt. Die erfindungsgemässen Polyamidformmassen können also die üblichen Additive in den üblicherweise geringen Anteilen, wie z.B. weniger als 15 Gew.-%, bevorzugtermassen weniger als 10 Gew.-%, insbesondere bevorzugt weniger als 0.1-5.0 Gew.-% aufweisen.

Entsprechend betrifft die vorliegende Erfindung gemäss einer weiteren bevorzugten Ausführungsform eine derartige Polyamidformmasse, die besteht aus
85-100 Gew.-%, vorzugsweise 90-100 Gew.-%, insbesondere vorzugsweise 95.0-99.9 Gew.% Copolyamid aufgebaut wenigstens aus den Polyamid-Einheiten AB/AC/D wie oben dargelegt;
0-15 Gew.-%, vorzugsweise 0-10 Gew.-%, insbesondere vorzugsweise 0.1-5.0 Gew.% Additiven, vorzugsweise ausgewählt aus der Gruppe: vom erfindungsgemässen Copolyamid AB/AC/D verschiedene Polyamide; UV-Stabilisatoren; Hitzestabilisatoren; Radikalfänger; Verarbeitungshilfsstoffe; Einschlussverhinderer; Gleitmittel; Entformungshilfsstoffe, einschliesslich Metallstearate oder -montanate, wobei das Metall vorzugsweise ausgewählt ist aus der Gruppe bestehend aus Magnesium, Calcium, Barium, Mineralöle oder Fettsäureamide; Entschäumer; Weichmacher; funktionelle Additive zur Beeinflussung der optischen Eigenschaften, insbesondere des Brechungsindexes; Schlagzähmodifikatoren; Füll- und/oder Zuschlagsstoffe; optische Aufheller; Farbstoffe oder Mischungen davon, wobei die Füll- und/oder Zuschlagstoffe bevorzugtermassen nanoskalig sind und/oder ausgewählt sind aus folgender Gruppe: Glasfasern, Glaskugeln, Carbonfasern, Russ, Graphit, Flammschutzmittel, Mineral einschliesslich Titandioxid, Calciumcarbonat oder Bariumsulfat, oder Mischungen davon.

Bevorzugte vom erfindungsgemässen Copolyamid AB/AC/D verschiedene Polyamide sind PA11, PA12, PA 610, PA612, PA614, PA616, PA1010, PA1012, PA1014 und PA1016, insbesondere bevorzugt ist PA12.

Bevorzugte Schlagzähmodifikatoren stammen aus der Gruppe, ausgewählt aus säure- oder säureanhydridmodifizierten Ethylen-α-Olefin-Copolymeren, Ethylen-Glycidylmethacryl-säure-Copoly¬meren und Methacrylat-Butadien-Styrol-Copolymeren.

Den erfindungsgemässen Formmassen können also auch Füll- oder Verstärkungsmittel zugegeben werden. In diesem Fall sind die aus den Formmassen hergestellten Formteile natürlich nicht notwendigerweise transparent. Neben Glas- und Kohlenstofffasern können als Verstärkungsmittel besonders solche auf Basis von nachwachsenden Rohstoffen und Bioanteilen über 50% eingesetzt werden. Besonders bevorzugt werden Naturfasern, wie z. B. Cellulose-, Hanf-, Flachs-, Baumwoll-, Woll- oder Holzfasern eingesetzt. Bevorzugtermassen verfügt eine solche Polyamidformmasse aber über keine Additive in Form von partikel- und/oder faserförmigen Füll- und/oder Zuschlagstoffe.

Zudem betrifft die vorliegende Erfindung ein Verfahren zur Herstellung einer Polyamidformmasse wie oben beschrieben, wobei dieses Verfahren bevorzugt dadurch gekennzeichnet ist, dass die Herstellung des Copolyamids aufgebaut wenigstens aus den Polyamid-Einheiten AB/AC/D in Druckgefässen erfolgt, mit einer Druckphase bei 270 °C bis 330 °C mit einer nachfolgenden Entspannung bei 260 °C bis 320 °C, mit einer nachfolgenden Entgasung bei 260 °C bis 320 °C sowie Austragen der Polyamidformmasse in Strangform, Abkühlen, Granulieren und Trocknen des Granulats, ggf. Compoundieren mit Additiven als Granulat und Formen in einem Extruder bei Massetemperaturen von 250 °C bis 350 °C zu einem Strang, Schneiden mit geeigneten Granulatoren zu Pellets. Bevorzugt weisen die erfindungsgemässen Copolyamide eine Lösungsviskosität (ηᵣₑₗ) bestimmt an Lösungen von 0.5 g Polymer in 100 ml m-Kresol gemäss ISO 307 (2013) bei 20°C zwischen 1.5 und 2.5, besonders bevorzugt zwischen 1.6 und 2.0 und ganz besonders bevorzugt zwischen 1.65 und 1.85 auf.

Zur Einstellung der gewünschten relativen Viskosität, gemessen in einer Lösung von 0.5 g Polymer in 100 ml m-Kresol bei 20 °C, können entweder das Diamin oder die Dicarbonsäuren in geringem Überschuss von 0.01 bis 3 Mol-% eingesetzt werden. Bevorzugt wird die Regelung mit Monoamin oder Monocarbonsäuren von 0.01 bis 2.0 Gew.-%, bevorzugt 0.05 bis 0.5 Gew.-% durchgeführt. Geeignete Regler sind Benzoesäure, Essigsäure, Propionsäure, Stearylamin oder deren Mischungen. Besonders bevorzugt sind Regler mit Amin- oder Carbonsäuregruppen, die zusätzlich Stabilisatorgruppen des Typs HALS oder des Typs tert-Butyl-Phenol enthalten, wie beispielsweise Triacetondiamin oder Isophthalsäure-Di-Triacetondiamin-Derivate. Besonders bevorzugt wird eine Regelung der Viskosität mit einer Kombination aus Diamin-Überschuss und Monocarbonsäure. Geeignete Katalysatoren zur Beschleunigung der Polykondensationsreaktion sind phosphorhaltige Säuren, wie beispielsweise H3PO2, H3PO3, H3PO4, deren Salze oder organischen Derivate, die gleichzeitig eine Reduzierung der Verfärbung während der Verarbeitung bewirken. Die Katalysatoren werden im Bereich von 0.01 bis 0.5 Gew.-%, bevorzugt im Bereich von 0.03 bis 0.1 Gew.-% zugegeben. Geeignete Entschäumer zur Vermeidung der Schaumbildung während der Entgasung sind wässrige Emulsionen, die Silicone oder Siliconderivate im Bereich von 0.001 bis 1,0 Gew.%, bevorzugt im Bereich von 0.01 bis 0.10 bei 10%iger Emulsion enthalten.

Geeignete Hitze- oder UV-Stabilisatoren können bereits vor der Polykondensation dem Ansatz in Mengen von 0.01 bis 0.5 Gew.-% zugegeben werden. Bevorzugt werden hochschmelzende Typen eingesetzt. Besonders bevorzugt wird Irganox 1098 verwendet. Zudem betrifft die vorliegende Erfindung Formteile aus einer derartigen Polyamidformmasse. Insbesondere betrifft die Erfindung wasserdampf-beständige, transparente Formteils, aus einer Polyamidformmasse oder mit wenigstens einem Bereich aus einer Polyamidformmasse wie oben beschrieben, vorzugsweise hergestellt mittels Spritzgiessverfahren und/oder Spritzprägeverfahren bei Massetemperaturen von 230 °C bis 320 °C, wobei das Werkzeug mit Temperaturen von 40 °C bis 130 °C eingestellt wird und wobei gegebenenfalls das Werkzeug mit Temperaturen von 40 °C bis 130 °C nach dem Füllen der Kavität einen Prägedruck auf das heisse Formteil aufbringt.

Besonders geeignete Verfahren zur Herstellung von fehlerfreien, spannungsarmen Oberflächen des Formteils aus den erfindungsgemässen, transparenten Polyamidformmassen, wie beispielsweise Linsen für Brillen oder hochwertige Gehäuseteile, ist ein Expansionsspritzprägeprozess, wobei Kavitäten mit Wandstärken von 1 bis 5 mm gefüllt werden und anschliessend die Werkzeugkavität bei permanenter Füllung auf höhere Wandstärken auseinandergefahren wird.

Geeignete Verfahren zur Herstellung von Folien, Rohren und Halbzeugen in Ein- oder Mehrschichtausführung aus den erfindungsgemässen, transparenten Polyamidformmassen sind Extrusionsverfahren auf Ein- oder Mehrwellenextrudern mit Massetemperaturen zwischen 250 °C bis 350 °C, wobei je nach Verträglichkeit der verschiedenen Schichten geeignete Haftvermittler in Form entsprechender Copolymere oder Blends eingesetzt werden können.

Formteile können massegefärbt oder mittels sogenannter Tauchbäder nachträglich eingefärbt werden. Formteile werden gegebenenfalls durch Fräsen, Bohren, Schleifen, Lasermarkieren, -schneiden und/oder -schweissen bearbeitet.

Derartige Formteile sind insbesondere bevorzugt dadurch gekennzeichnet, dass sie eine Widerstandsfähigkeit gegenüber Wasserdampfzyklen von mehr als 700, vorzugsweise von mehr als 1000 aufweist.

Bei einem solchen Formteil kann es sich bevorzugt um eine Leitung oder einen Behälter handeln, vorzugsweise für Kontakt mit Wasser und/oder Wasserdampf. Insbesondere bevorzugt handelt es sich um eine Leitung oder einen Behälter in der Prozesstechnologie (inklusive Heizungstechnik), in der Nahrungsmitteltechnologie, insbesondere um einen Behälter für die Herstellung und/oder Verarbeitung und/oder das Aufwärmen von Nahrungsmitteln, bevorzugt im Baby- und/oder Kleinkindernahrungsmittelbereich.

Ein derartiges Formteil ist bevorzugtermassen gekennzeichnet durch eine Lichttransmission, gemessen nach ASTM D1003 (2013), bestimmt an Platten mit einer Dimension 2 x 60 x 60 mm oder an Rundplatten der Dimension 2 x 70 mm, bei einer Temperatur von 23 °C, mit dem Messgerät Haze Gard Plus der Firma Byk Gardner mit der CIE Lichtart C, wobei die Lichttransmission wenigstens 88%, bevorzugt wenigstens 90% und besonders bevorzugt wenigstens 92% beträgt.

Zu guter Letzt betrifft die vorliegende Erfindung auch die Verwendung eines derartigen Formteils als Teil eines Haushaltsgerätes, insbesondere Nahrungsmittelbehälter oder Teil davon, insbesondere als Teil eines Küchengeräts, insbesondere für die Herstellung und/oder Verarbeitung und/oder das Aufwärmen von Nahrungsmitteln unter Verwendung von Wasserdampf.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: Formteil zur Bestimmung der Wasserdampf-Beständigkeit;
- Fig. 2: Gerät zur Bestimmung der Wasserdampf-Beständigkeit.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

Die Herstellung der erfindungsgemässen transparenten Copolyamide erfolgt in an sich bekannter Weise in bekannten, rührbaren Druckautoklaven mit einem Vorlagegefäss und einem Reaktionsgefäss:
Im Vorlagegefäss wird deionisiertes Wasser (25 Gew.-% bezogen auf den Ansatz in Tabelle 1) vorgelegt und die Monomere und Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäss gepumpt und dort auf die gewünschte Reaktionstemperatur von 260 bis 350 °C bei einem Druck von maximal 30 bar aufgeheizt. Der Ansatz wird in der Druckphase für 2 bis 4 Stunden auf der Reaktionstemperatur gehalten. In der anschliessenden Entspannungsphase wird der Druck innerhalb von 1 bis 2 Stunden auf atmosphärischen Druck reduziert, wobei die Temperatur leicht sinken kann.

In der folgenden Entgasungsphase wird der Ansatz bei atmosphärischem Druck für 0.5 bis 1 Stunden auf einer Temperatur von 270 bis 350 °C gehalten. Die Polymerschmelze wird in Strangform ausgetragen, im Wasserbad bei 15 bis 80 °C abgekühlt und granuliert. Das Granulat wird für 12 Stunden bei 80 bis 120 °C unter Stickstoff oder im Vakuum auf einen Wassergehalt von weniger als 0.1 Gew.-% getrocknet.

Zur Herstellung der in den Beispielen und Vergleichsbeispielen beschriebenen Copolyamide werden die folgenden Monomere verwendet:
3,3'-dimethyl-4,4'-diaminodicyclohexylmethan (MACM): Gefrierbereich nach ASTM D1015-55: - 7 bis - 0.6 °C; Hersteller: BASF AG, Deutschland.
Dodecandisäure (DDS): Schmelzbereich: 128 bis 132 °C; Hersteller: Invista Nederland B.V., Niederlande.
Isophthalsäure (IPS): Schmelzbereich: 345 bis 348 °C; Hersteller: Flint Hills Resources, Schweiz.
Terephthalsäure (TPS): Schmelzbereich: > 400 °C; Hersteller: BP Amoco Chemical Company, USA.
Laurinlactam (LL): Schmelzbereich: 149 bis 153 °C; Hersteller: EMS-CHEMIE AG, Schweiz

Zusätzlich wurden ca. 0.15 Gew.-% Benzoesäure als Kettenregler und ca, 0.01 Gew.-% Antifoam RD als Entschäumer (10 Gew.-% Emulsion, Dow Corning S.A., Belgien) eingesetzt, wobei sich die Konzentrationen jeweils auf den Ansatz in Tabelle 1 beziehen.

Die Messungen wurden nach den folgenden Normen und an den folgenden Prüfkörpern durchgeführt.

### Zug-E-Modul:

ISO 527 (2012) mit einer Zuggeschwindigkeit von 1 mm/min ISO-Zugstab, Norm: ISO/CD 3167, Typ A1, 170 x 20/10 x 4 mm Temperatur 23 °C.

### Bruchfestigkeit und Bruchdehnung:

ISO 527 (2012) mit einer Zuggeschwindigkeit von 50 mm/min ISO-Zugstab, Norm: ISO/CD 3167, Typ A1, 170 x 20/10 x 4 mm Temperatur 23 °C.

### Kerbschlagzähigkeit nach Charpy:

ISO 179/*eA (* 2 = instrumentiert) (2011); ISO-Prüfstab, Norm: ISO/CD 3167, Typ B1, 80 x 10 × 4 mm; Temperatur 23 °C.

### Glasübergangstemperatur (Tg), Schmelzpunkt und Schmelzwärme:

ISO-Norm 11357-1, 11357-2, 11357-3 (2013); Granulat; Die Differential Scanning Calorimetry (DSC) wurde mit dem Gerät DSC 2920 der Firma TA Instruments mit einer Aufheizrate von 20 K/min und einer Abkühlrate von 5 K/min durchgeführt. Das Thermogramm wurde mit dem Programm Universal Analysis 2000 der Firma TA Instruments ausgewertet. Zur Bestimmung der Glasübergangstemperatur wurde die Probe nach der ersten Aufheizung in Trockeneis abgeschreckt. Die Glasübergangstemperatur (Tg) wurde bei der zweiten Aufheizung bestimmt. Der Mittelpunkt des Glasübergangsbereichs, welcher als Glasübergangstemperatur (Tg) angegeben wurde, wurde nach der Methode "Half Height" ermittelt.

### Transparenz:

ASTM D 1003 (2013); Rundplatte 70 mm oder Platte 60 x 60 mm, Dicke 2 mm, Temperatur 23 °C; Messgerät Haze Gard plus der Firma Byk Gardner mit CIE Lichtart C. Der Lichttransmissionswert wird in % der eingestrahlten Lichtmenge angegeben.

### Relative Viskosität:

ISO 307 (2007); 0,5 g in 100 ml Lösungsmittel in m-Kresol Temperatur 20 °C; Berechnung der relativen Viskosität (RV) nach RV = t/to in Anlehnung an Abschnitt 11 der Norm.

HDT A (1,8 MPa) und HDT B (0.45 MPa):
ISO 75; ISO-Schlagstab 80x10x4.

### Wasserdampf-Beständigkeit (Belastbarkeit mit Wasserdampfzyklen):

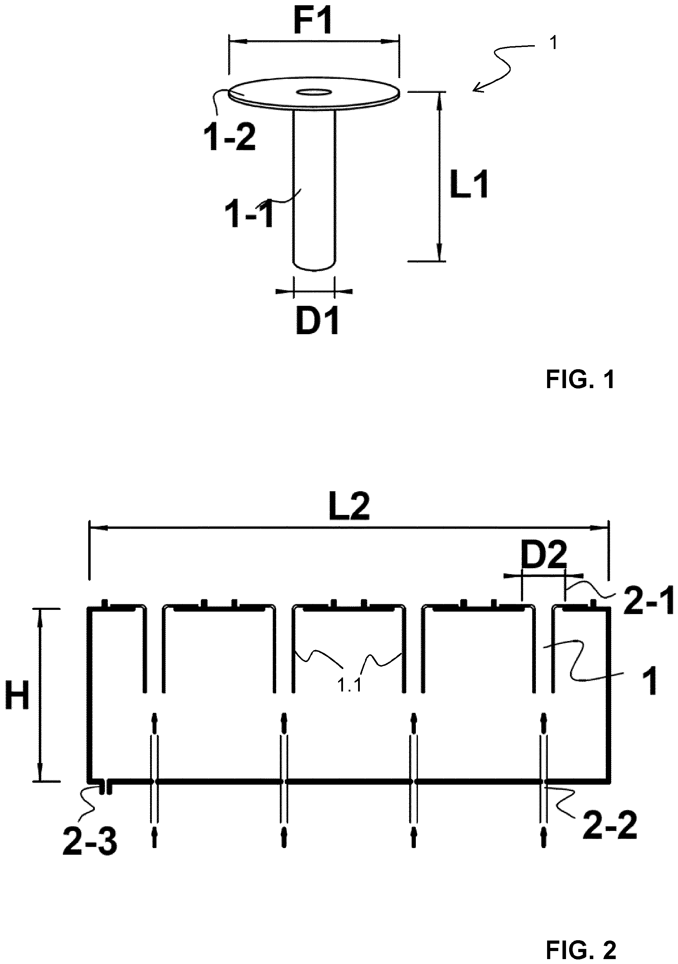

Die Formteile 1, Rohrstücke mit einseitigem Flansch (vgl. Fig. 1), werden im Spritzguss aus den beschriebenen Materialien hergestellt und haben die im Folgenden angegebenen Dimensionen: Rohrlänge L1 = 100 mm, Innendurchmesser Rohr D1 = 20 mm, Wandstärke von Rohr und Flansch= 2 mm, Flanschdurchmesser F1 = 100 mm, Radius zwischen Rohr und Flansch = 5 mm. Für den Test werden 4 Formteile von oben in die Öffnungen des Gerätes zur Bestimmung der Wasserdampf-Beständigkeit 2 (vgl. Fig. 2) eingesetzt, so dass das Rohr 1-1 in den Innenraum des Gerätes hineinragt und der Flansch 1-2 in Bezug auf die Öffnung 2-1 (Durchmesser der Öffnung D2 = 50 mm) zentriert auf der Aussenseite aufliegt. Damit die Formteile diese Position während des Tests beibehalten, sind auf der Oberseite der Testapparatur Führungselemente angebracht. Von unten ragt pro Formteil je ein Wasserdampfeinleitungsrohr 2-2 in die Apparatur hinein, das senkrecht unterhalb des Formteils zentrisch in einem Abstand von 5 cm positioniert ist. Die Dampfzufuhr wird über Ventile gesteuert. Das Gerät zur Bestimmung der Dampfbeständigkeit 2 hat die Aussenmasse 60 × 20 × 15 (L2 × H × T) cm.

Während des ersten Teils des Tests, der Dampfbehandlung, werden die Formteile 75 Minuten einem Dampfstrom mit einer Temperatur von 100°C ausgesetzt. Der Dampfstrom einer Dampfzuleitung beträgt dabei 0.3 g/min. Kondensierter Wasserdampf kann über eine Öffnung 2-3 im unteren Teil der Testapparatur abfliessen, während der nicht kondensierende Anteil des Wasserdampfes durch die Öffnungen der Formteile entweichen kann.

Nach 75 Minuten Dampfbehandlung wird die Dampfzufuhr abgestellt und die Formteile können für einen Zeitraum von 75 Minuten abkühlen. Die Umgebungstemperatur beträgt dabei 23°C und die relative Luftfeuchte 60%.

Nach Beendigung der Abkühlungsphase beginnt der neue Zyklus wiederum mit der Bedampfung der Formteile.

Im Laufe des Tests werden die Formteile optisch auf die Bildung von Haarrissen beurteilt. Haarrisse bilden sich insbesondere am Rohr nahe der Dampfzuleitung und im Bereich des Übergangs zum Flansch aus. In der Tabelle ist die jeweilige Anzahl an Testzyklen aufgeführt, bei der erstmals Haarrisse am Formteil beobachtet wurden. Zeigen die Formteile auch nach 1001 Zyklen keine Haarrisse, so wird der Test abgebrochen.

Die Prüfkörper werden auf einer Spritzgussmaschine der Firma Arburg, Modell Allrounder 420 C 1000-250 hergestellt. Dabei werden Zylindertemperaturen zwischen 230 und 320 °C verwendet. Die Formtemperatur beträgt 80 °C. Bei den Platten für die Transmissionsmessung und den Formteilen für die Bestimmung der Dampfbeständigkeit werden polierte Formen verwendet.

In der unten abgebildeten Tabelle 1 werden die erfindungsgemässen Beispiele (B1 und B2) den Vergleichsbeispielen (VB1-VB4) gegenübergestellt.

**Tabelle 1:**

| **Edukte** | **Einheit** | **B1** | **B2** | **VB1** | **VB2** | **VB3** | **VB4** |
|---|---|---|---|---|---|---|---|
| TPS | 9 | 6196 | 7200 | 13671 | 4652 | 8314 | 3520 |
| IPS | 9 | 6196 | 7200 | 7595 | 11048 | 8314 | 8810 |
| DDS | 9 | 16218 | 15500 | 0 | 18540 | 11034 | 14650 |
| LL | 9 | 11924 | 10425 | 25634 | 0 | 11002 | 15350 |
| MACM | 9 | 34972 | 36700 | 30913 | 41706 | 35288 | 32830 |

| **Struktureinheiten** | | | | | | | |
|---|---|---|---|---|---|---|---|
| MACMT | mol-% | 18.15 | 20.96 | 31.91 | 16 | 24.56 | 9.83 |
| MACMI | mol-% | 18.15 | 20.96 | 17.73 | 38 | 24.56 | 24.59 |
| MACM12 | mol-% | 34.28 | 32.54 | 0 | 46 | 23.51 | 29.5 |
| 12 | mol-% | 29.41 | 25.55 | 50.37 | 0 | 27.36 | 36.08 |
| MACMT + MACMI | mol-% | 36.3 | 41.92 | 49.64 | 54 | 49.12 | 34.42 |
| MACM12+12 | mol-% | 63.69 | 58.09 | 50.37 | 46 | 50.88 | 65.58 |

| **Eigenschaften** | | | | | | | |
|---|---|---|---|---|---|---|---|
| Tg | °C | 170 | 174 | 169 | 203 | 185 | 162 |
| HDT B | °C | 153 | 157 | 150 | 189 | 175 | 139 |
| HDT A | °C | 133 | 136 | 136 | 162 | 146 | 125 |
| E-Modul | MPa | 1900 | 2000 | 2000 | 2130 | 2000 | 1930 |
| Bruchfestigkeit | MPa | 74 | 76 | 79 | 78 | 80 | 76 |
| Bruchdehnung | % | 120 | 115 | 90 | 91 | 72 | 115 |
| Kerbschlagzähigkeit | kJ/m² | 12 | 12 | 11 | 12 | 11 | 10 |
| Transparenz | % | 93.5 | 93.5 | 92.5 | 93.2 | 93.2 | 93.3 |
| Dampfzyklen | | > 1000 | >1000 | 530 | 570 | 620 | 680 |
| Relative Viskosität | | 1.72 | 1.70 | 1.67 | 1.60 | 1.64x | 1.74x |

Anhand der Beispiele und der Vergleichsbeispiele lässt sich erkennen, dass die gute Kombination aus (thermo)mechanischen Eigenschaften (insbesondere gute Werte für HDT, E-Modul und Bruchdehnung sowie Kerbschlagzähigkeit) und guter Belastbarkeit mit Dampfzyklen nur für die erfindungsgemässen Polyamidformmassen erreicht werden kann. Insbesondere zeigt sich bei einem Vergleich mit VB1, dass Dodecandisäure (oder entsprechende langkettige Disäuren wie beansprucht) als Baustein entscheidend ist, und beim Vergleich mit VB2, dass das Laurinlactam (oder entsprechende langkettige Lactame wie beansprucht) als Baustein entscheidend ist. Ohne diese Bausteine können die erfindungsgemässen Eigenschaften nicht erreicht werden. Weiter zeigt sich beim Vergleich mit VB3 und mit VB4, dass die spezifische Einstellung der Proportionen entscheidend ist. So kann (vergleiche VB3) eine Formmasse mit zu wenig Dodecandisäure und zu viel aromatischen Dicarbonsäuren die Widerstandsfähigkeit gegenüber Dampfzyklen nicht gewährleisten. Weiter zeigt sich im Vergleich mit VB4, dass ein zu hoher Anteil an aliphatischen Blöcken ebenfalls keine genügende Widerstandsfähigkeit gegenüber Dampfzyklen zeigt.

Die Beispiele zeigen im Vergleich mit den Vergleichsbeispielen also auf, dass die einzelnen Polyamid-Einheiten respektive Bausteine für die Gewährleistung der entscheidenden Eigenschaften kritisch verantwortlich sind, und dass die Proportionen nur im Rahmen der engen beanspruchten Bereiche zulässig sind, um die entscheidenden Eigenschaften auch wirklich bereitzustellen.

**BEZUGSZEICHENLISTE**

| | | | |
|---|---|---|---|
| 1 | Formteil zur Bestimmung der Wasserdampf-Beständigkeit | D1 | Innendurchmesser von 1-1 |
| | | F1 | Durchmesser von 1-2 |
| 1-1 | Rohr von 1 | L1 | Länge von 1 |
| 1-2 | Flansch von 1 | | |
| 2 | Gerät zur Bestimmung der Wasserdampf-Beständigkeit | D2 | Durchmesser von 2.1 |
| 2-1 | Öffnung in 2 für 1 | H | Höhe von 2 |
| 2-2 | Wasserdampfeinleitungsrohr | L2 | Länge von 2 |
| 2-3 | Abflussöffnung | | |

## Patentansprüche

1. Polyamidformmasse enthaltend mindestens ein Copolyamid aufgebaut wenigstens aus den Polyamid-Einheiten AB/AC/D, wobei
(A) als wenigstens ein cycloaliphatisches Diamin aus der Gruppe: Bis-(4-amino-3-methyl-cyclohexyl)methan (MACM) und Bis-(4-amino-cyclohexyl)methan (PACM), ausgewählt ist;
(B) als wenigstens eine aromatische Dicarbonsäure aus der Gruppe: Isophthalsäure (I), Naphtalindicarbonsäure, und Terephthalsäure (T), ausgewählt ist;
(C) als wenigstens eine aliphatische Dicarbonsäure aus der Gruppe: Decandisäure, Undecandisäure, Dodecandisäure, Tridecandisäure, Tetradecandisäure, Pentadecandisäure, Hexadecandisäure ausgewählt ist;
(D) als wenigstens ein Lactam oder eine α,ω-Aminocarbonsäure aus der Gruppe: Laurinlactam (LC 12), Undecanolactam (LC 11), 12-Aminododecansäure, und 11-Aminoundecansäure, ausgewählt ist,
wobei
die Anteile der Polyamid-Einheiten AB im Bereich von 30 bis 45 mol-%,
die Anteile der Polyamid-Einheiten AC im Bereich von 30 bis 40 mol-% und
die Anteile der Polyamid-Einheiten D im Bereich von 20 bis 32 mol-% liegen,
und
wobei die Summe der Polyamid-Einheiten AB, AC und D 100 mol-% beträgt.

2. Polyamidformmasse nach Anspruch 1, **dadurch gekennzeichnet, dass** die Summe der aliphatischen Polyamid-Einheiten AC und D im Bereich von 55-65 mol-%, vorzugsweise im Bereich von 58-64 mol-% liegt, und die Anteile der Polyamid-Einheiten AB im Bereich von 35 - 45 mol-% respektive im Bereich von 36 - 42 mol-% liegen.

3. Polyamidformmasse nach einem der vorhergehenden Ansprüche, **dadurch gekennzeichnet, dass**
und/oder die Anteile der Polyamid-Einheiten AC im Bereich von 31-38, vorzugsweise im Bereich von 32-35 mol-%,
und/oder die Anteile der Polyamid-Einheiten D im Bereich von 22-31, vorzugsweise im Bereich von 25-30 mol-% liegen.

4. Polyamidformmasse nach einem der vorhergehenden Ansprüche, **dadurch gekennzeichnet, dass** (A) ausgewählt ist als ausschliesslich Bis-(4-amino-3-methylcyclohexyl)methan (MACM).

5. Polyamidformmasse nach einem der vorhergehenden Ansprüche, **dadurch gekennzeichnet, dass** (B) ausgewählt ist als eine Mischung von Isophthalsäure (I) und Terephthalsäure (T), wobei vorzugsweise das Verhältnis von Isophthalsäure (I) zu Terephthalsäure (T) im Bereich von 40:60 bis 60:40 liegt, insbesondere bevorzugt im Bereich von 45:55 bis 55:45.

6. Polyamidformmasse nach einem der vorhergehenden Ansprüche, **dadurch gekennzeichnet, dass** (C) ausgewählt ist ausschliesslich aus Dodecandisäure.

7. Polyamidformmasse nach einem der vorhergehenden Ansprüche, **dadurch gekennzeichnet, dass** (D) ausgewählt ist ausschliesslich aus Laurinlactam (LC 12).

8. Polyamidformmasse nach einem der vorhergehenden Ansprüche, **dadurch gekennzeichnet, dass** das Copolyamid ausschliesslich aus den Polyamid-Einheiten AB/AC/D besteht.

9. Polyamidformmasse nach einem der vorhergehenden Ansprüche, **dadurch gekennzeichnet, dass** sie besteht aus
85-100 Gew.-%, vorzugsweise 90-100 Gew.-%, insbesondere vorzugsweise 95.0-99.9 Gew.% Copolyamid aufgebaut wenigstens aus den Polyamid-Einheiten AB/AC/D;
0-15 Gew.-%, vorzugsweise 0-10 Gew.-%, insbesondere vorzugsweise 0.1-5.0 Gew.% Additiven, vorzugsweise ausgewählt aus der Gruppe: vom Copolyamid AB/AC/D verschiedene Polyamide; UV-Stabilisatoren; Hitzestabilisatoren; Radikalfänger; Verarbeitungshilfsstoffe; Einschlussverhinderer; Gleitmittel; Entformungshilfsstoffe, einschliesslich Metallstearate oder-montanate, wobei das Metall vorzugsweise ausgewählt ist aus der Gruppe bestehend aus Magnesium, Calcium, Barium, Mineralöle oder Fettsäureamide; Entschäumer; Weichmacher; funktionelle Additive zur Beeinflussung der optischen Eigenschaften, insbesondere des Brechungsindexes; Schlagzähmodifikatoren; Füll- und/oder Zuschlagsstoffe; optische Aufheller; Farbstoffe oder Mischungen davon, wobei die Füll- und/oder Zuschlagstoffe bevorzugtermassen nanoskalig sind und/oder ausgewählt sind aus folgender Gruppe: Glasfasern, Glaskugeln, Carbonfasern, Russ, Graphit, Flammschutzmittel, Mineral einschliesslich Titandioxid, Calciumcarbonat oder Bariumsulfat, oder Mischungen davon.

10. Polyamidformmasse nach Anspruch 9, **dadurch gekennzeichnet, dass** die Additive keine partikel- und/oder faserförmigen Füll- und/oder Zuschlagstoffe enthalten.

11. Verfahren zur Herstellung einer Polyamidformmasse gemäss einem der Ansprüche 1 bis 10, **dadurch gekennzeichnet, dass** die Herstellung des Copolyamids aufgebaut wenigstens aus den Polyamid-Einheiten AB/AC/D in Druckgefässen erfolgt, mit einer Druckphase bei 180°C bis 330 °C, vorzugsweise 270 °C bis 330 °C mit einer nachfolgenden Entspannung bei 260°C bis 350 °C, vorzugsweise 260 °C bis 320 °C, mit einer nachfolgenden Entgasung bei 260 °C bis 350°C, vorzugsweise 270°C bis 320 °C sowie Austragen der Polyamidformmasse in Strangform, Abkühlen, Granulieren und Trocknen des Granulats, ggf. Compoundieren mit Additiven als Granulat und Formen in einem Extruder bei Massetemperaturen von 250 °C bis 350 °C zu einem Strang, Schneiden mit geeigneten Granulatoren zu Pellets.

12. Formteil, insbesondere wasserdampf-beständiges, transparentes Formteil, aus einer Polyamidformmasse oder mit wenigstens einem Bereich aus einer Polyamidformmasse gemäss einem der Ansprüche 1 bis 10, vorzugsweise hergestellt mittels Spritzgiessverfahren und/oder Spritzprägeverfahren bei Massetemperaturen von 230 °C bis 320 °C, wobei das Werkzeug mit Temperaturen von 40 °C bis 130 °C eingestellt wird und wobei gegebenenfalls das Werkzeug mit Temperaturen von 40 °C bis 130 °C nach dem Füllen der Kavität einen Prägedruck auf das heisse Formteil aufbringt.

13. Formteil nach Anspruch 12, **dadurch gekennzeichnet, dass** es eine Widerstandsfähigkeit gegenüber Dampfzyklen von mehr als 700, vorzugsweise von mehr als 1000 aufweist.

14. Formteil nach einem der vorhergehenden Ansprüche, **dadurch gekennzeichnet, dass** es sich um eine Leitung oder einen Behälter handelt, vorzugsweise für Kontakt mit Wasser und/oder Wasserdampf, insbesondere bevorzugt um eine Leitung oder einen Behälter in der Prozesstechnologie, in der Nahrungsmitteltechnologie, insbesondere um einen Behälter für die Herstellung und/oder Verarbeitung und/oder das Aufwärmen von Nahrungsmitteln, bevorzugt im Baby- und/oder Kleinkindernahrungsmittelbereich.

15. Verwendung eines Formteils nach einem der Ansprüche 12-14 als Nahrungsmittelbehälter oder Teil davon, insbesondere als Teil eines Küchengeräts, insbesondere für die Herstellung und/oder Verarbeitung und/oder das Aufwärmen von Nahrungsmitteln unter Verwendung von Wasserdampf.

## Claims

1. Polyamide moulding compound comprising at least one copolyamide formed at least from the polyamide units AB/AC/D, wherein
(A) is selected as at least one cycloaliphatic diamine from the group: bis(4-amino-3-methylcyclohexyl)methane (MACM) and bis(4-aminocyclohexyl)methane (PACM);
(B) is selected as at least one aromatic dicarboxylic acid from the group: isophthalic acid (I), naphthalenedicarboxylic acid, and terephthalic acid (T);
(C) is selected as at least one aliphatic dicarboxylic acid from the group: decanedioic acid, undecanedioic acid, dodecanedioic acid, tridecanedioic acid, tetradecanedioic acid, pentadecanedioic acid, hexadecanedioic acid;
(D) is selected as at least one lactam or one α,ω-aminocarboxylic acid from the group: laurolactam (LC 12), undecanolactam (LC 11), 12-aminododecanoic acid, and 11-aminoundecanoic acid,
wherein
the proportions of polyamide units AB are in the range from 30 to 45 mol%,
the proportions of polyamide units AC are in the range from 30 to 40 mol%, and
the proportions of polyamide units D are in the range from 20 to 32 mol%,
and
wherein the sum total of polyamide units AB, AC and D is 100 mol%.

2. Polyamide moulding compound according to Claim 1, **characterized in that** the sum total of aliphatic polyamide units AC and D is in the range from 55-65 mol%, preferably in the range from 58-64 mol%, and the proportions of polyamide units AB are in the range from 35 - 45 mol% or in the range from 36 - 42 mol%.

3. Polyamide moulding compound according to either of the preceding claims, **characterized in that**
the proportions of polyamide units AC are in the range from 31-38, preferably in the range from 32-35 mol%,
and/or the proportions of polyamide units D are in the range from 22-31, preferably in the range from 25-30 mol%.

4. Polyamide moulding compound according to any of the preceding claims, **characterized in that** (A) is selected as exclusively bis(4-amino-3-methylcyclohexyl)methane (MACM).

5. Polyamide moulding compound according to any of the preceding claims, **characterized in that** (B) is selected as a mixture of isophthalic acid (I) and terephthalic acid (T), the ratio of isophthalic acid (I) to terephthalic acid (T) preferably being in the range from 40:60 to 60:40, and especially preferably in the range from 45:55 to 55:45.

6. Polyamide moulding compound according to any of the preceding claims, **characterized in that** (C) is selected exclusively from dodecanedioic acid.

7. Polyamide moulding compound according to any of the preceding claims, **characterized in that** (D) is selected exclusively from laurolactam (LC 12).

8. Polyamide moulding compound according to any of the preceding claims, **characterized in that** the copolyamide is composed exclusively of the polyamide units AB/AC/D.

9. Polyamide moulding compound according to any of the preceding claims, **characterized in that** it is composed of
85-100% by weight, preferably 90-100% by weight, especially preferably 95.0-99.9% by weight, of copolyamide formed at least from the polyamide units AB/AC/D;
0-15% by weight, preferably 0-10% by weight, especially preferably 0.1-5.0% by weight, of additives, preferably selected from the group: polyamides different from the copolyamide AB/AC/D; UV stabilizers; heat stabilizers; free-radical scavengers; processing aids; inclusion inhibitors; lubricants; mould release aids, including metal stearates or metal montanates, in which the metal is preferably selected from the group consisting of magnesium, calcium, barium; mineral oils or fatty acid amides; antifoams; plasticizers; functional additives for influencing the optical properties, especially the refractive index; impact modifiers; fillers and/or admixtures; optical brighteners; dyes or mixtures thereof, wherein the fillers and/or admixtures are preferably nanoscale and/or are selected from the following group: glass fibres, glass beads, carbon fibres, carbon black, graphite, flame retardants, minerals including titanium dioxide, calcium carbonate or barium sulfate, or mixtures thereof.

10. Polyamide moulding compound according to Claim 9, **characterized in that** the additives do not contain any particulate and/or fibrous fillers and/or admixtures.

11. Process for preparing a polyamide moulding compound according to any of Claims 1 to 10, **characterized in that** the copolyamide formed at least from the polyamide units AB/AC/D is prepared in pressure vessels, with a pressure phase at 180°C to 330°C, preferably 270°C to 330°C, with a subsequent expansion at 260°C to 350°C, preferably 260°C to 320°C, with a subsequent degassing at 260°C to 350°C, preferably 270°C to 320°C, and discharge of the polyamide moulding compound in the form of strands, cooling, pelletizing and drying of the pelletized material, optionally compounding with additives as pelletized material and forming in an extruder at melt temperatures of 250°C to 350°C to form a strand, chopping using suitable pelletizers to give pellets.

12. Moulding, especially steam-resistant, transparent moulding, made from a polyamide moulding compound or having at least one region made from a polyamide moulding compound according to any of Claims 1 to 10, preferably produced by means of injection moulding processes and/or injection-compression moulding processes at melt temperatures of 230°C to 320°C, wherein the mould is adjusted to temperatures of 40°C to 130°C and wherein optionally the mould at temperatures of 40°C to 130°C after filling of the cavity applies compression to the hot moulding.

13. Moulding according to Claim 12, **characterized in that** it has a resistance to more than 700, preferably more than 1000, steam cycles.

14. Moulding according to either of the preceding claims, **characterized in that** it is a conduit or a container, preferably for contact with water and/or steam, especially preferably a conduit or a container in process technology, in food technology, especially a container for the production and/or processing and/or heating of foods, preferably in the baby and/or infant food sector.

15. Use of a moulding according to any of Claims 12-14 as a food container or a part thereof, especially as a part of a kitchen appliance, especially for the production and/or processing and/or heating of foods using steam.

## Revendications

1. Composé de moulage polyamide comprenant au moins un copolyamide formé au moins à partir des unités polyamides AB/AC/D, dans lequel
(A) est choisie comme au moins une diamine cycloaliphatique dans le groupe : bis(4-amino-3-méthylcyclohexyl)méthane (MACM) et bis(4-aminocyclohexyl)méthane (PACM) ;
(B) est choisi comme au moins un acide dicarboxylique aromatique dans le groupe : acide isophtalique (I), acide naphtalènedicarboxylique et acide téréphtalique (T) ;
(C) est choisi comme au moins un acide dicarboxylique aliphatique dans le groupe : acide décanedioïque, acide undécanedioïque, acide dodécanedioïque, acide tridécanedioïque, acide tétradécanedioïque, acide pentadécanedioïque, acide hexadécanedioïque ;
(D) est choisi comme au moins un lactame ou un acide a,ω -aminocarboxylique du groupe : laurolactame (LC 12), undécanolactame (LC 11), acide 12-aminododécanoïque et acide 11-aminoundécanoïque,
dans lequel
les proportions d'unités de polyamide AB sont comprises entre 30 et 45 % en moles,
les proportions d'unités de polyamide AC sont comprises entre 30 et 40 % en moles, et
les proportions d'unités polyamides D sont comprises entre 20 et 32 % en moles,
et
dans lequel la somme totale des unités de polyamide AB, AC et D est de 100 % en moles.

2. Composé de moulage polyamide selon la revendication 1, **caractérisé en ce que** la somme totale des unités polyamides aliphatiques AC et D est comprise entre 55 et 65 % en moles, de préférence entre 58 et 64 % en moles, et que les proportions des unités polyamides AB sont comprises entre 35 et 45 % en moles ou entre 36 et 42 % en moles.

3. Composé de moulage polyamide selon l'une ou l'autre des revendications précédentes, **caractérisé par le fait que**
les proportions d'unités de polyamide AC sont comprises entre 31 et 38, de préférence entre 32 et 35 % molaires,
et/ou les proportions d'unités de polyamide D sont comprises entre 22 et 31, de préférence entre 25 et 30 % molaires.

4. Composé de moulage polyamide selon l'une quelconque des revendications précédentes, **caractérisé en ce que** (A) est choisi comme étant exclusivement du bis(4-amino-3-méthylcyclohexyl)méthane (MACM).

5. Composé de moulage polyamide selon l'une quelconque des revendications précédentes, **caractérisé en ce que** (B) est choisi comme un mélange d'acide isophtalique (I) et d'acide téréphtalique (T), le rapport entre l'acide isophtalique (I) et l'acide téréphtalique (T) étant de préférence compris entre 40:60 et 60:40, et de préférence encore entre 45:55 et 55:45.

6. Composé de moulage polyamide selon l'une quelconque des revendications précédentes, **caractérisé par le fait que** (C) est choisi exclusivement parmi l'acide dodécanedioïque.

7. Composé de moulage polyamide selon l'une quelconque des revendications précédentes, **caractérisé en ce que** (D) est choisi exclusivement parmi le laurolactame (LC 12).

8. Composé de moulage polyamide selon l'une quelconque des revendications précédentes, **caractérisé par le fait que** le copolyamide est composé exclusivement des unités polyamides AB/AC/D.

9. Composé de moulage polyamide selon l'une quelconque des revendications précédentes, **caractérisé par le fait qu'**il est composé de
85-100% en poids, de préférence 90-100% en poids, de préférence 95,0-99,9% en poids, de copolyamide formé au moins à partir des unités polyamides AB/AC/D ;
0-15% en poids, de préférence 0-10% en poids, de préférence 0,1-5.0 % en poids, d'additifs, de préférence choisis dans le groupe : polyamides différents du copolyamide AB/AC/D ; stabilisateurs UV ; stabilisateurs thermiques ; piégeurs de radicaux libres ; auxiliaires de fabrication ; inhibiteurs d'inclusion ; lubrifiants ; auxiliaires de démoulage, y compris stéarates métalliques ou montanates métalliques, dans lesquels le métal est de préférence choisi dans le groupe constitué par le magnésium, le calcium, le baryum ; huiles minérales ou amides d'acides gras ; antimousses ; plastifiants ; additifs fonctionnels pour influencer les propriétés optiques, en particulier l'indice de réfraction ; modificateurs d'impact ; charges et/ou adjuvants ; azurants optiques ; colorants ou mélanges de ceux-ci, les charges et/ou adjuvants étant de préférence de taille nanométrique et/ou choisis dans le groupe suivant : fibres de verre, billes de verre, fibres de carbone, noir de carbone, graphite, retardateurs de flamme, minéraux, y compris le dioxyde de titane, le carbonate de calcium ou le sulfate de baryum, ou leurs mélanges.

10. Composé de moulage polyamide selon la revendication 9, **caractérisé par le fait que** les additifs ne contiennent pas de charges particulaires et/ou fibreuses et/ou d'adjuvants.

11. Procédé de préparation d'un composé de moulage polyamide selon l'une des revendications 1 à 10, **caractérisé par le fait que** le copolyamide formé au moins à partir des unités polyamides AB/AC/D est préparé dans des cuves sous pression, avec une phase de pression à 180°C à 330°C, de préférence 270°C à 330°C, avec une expansion ultérieure à 260°C à 350°C, de préférence 260°C à 320°C, avec un dégazage ultérieur à 260°C à 350°C, de préférence de 270°C à 320°C, et évacuation du composé de moulage polyamide sous forme de fils, refroidissement, granulation et séchage du matériau granulé, éventuellement mélange avec des additifs sous forme de matériau granulé et formation dans une extrudeuse à des températures de fusion de 250°C à 350°C pour former un fil, hachage à l'aide de granulateurs appropriés pour donner des boulettes.

12. Moulage, en particulier moulage transparent résistant à la vapeur, réalisé à partir d'un composé de moulage polyamide ou comportant au moins une zone réalisée à partir d'un composé de moulage polyamide selon l'une quelconque des revendications 1 à 10, de préférence produit au moyen de procédés de moulage par injection et/ou de procédés de moulage par injection-compression à des températures de fusion de 230°C à 320°C, dans lequel le moule est ajusté à des températures de 40°C à 130°C et dans lequel, éventuellement, le moule à des températures de 40°C à 130°C après le remplissage de la cavité applique une compression au moulage à chaud.

13. Moulage selon la revendication 12, **caractérisé en ce qu'**il a une résistance à plus de 700, de préférence plus de 1000, cycles de vapeur.

14. Moulage selon l'une ou l'autre des revendications précédentes, **caractérisé en ce qu'**il s'agit d'un conduit ou d'un récipient, de préférence pour le contact avec l'eau et/ou la vapeur, de préférence un conduit ou un récipient dans la technologie des procédés, dans la technologie alimentaire, de préférence un récipient pour la production et/ou le traitement et/ou le chauffage d'aliments, de préférence dans le secteur de l'alimentation pour bébés et/ou enfants en bas âge.

15. Utilisation d'une pièce moulée selon l'une des revendications 12 à 14 comme récipient alimentaire ou partie de celui-ci, notamment comme élément d'un appareil de cuisine, en particulier pour la production et/ou le traitement et/ou le chauffage d'aliments à la vapeur.
